# EUROPÄISCHE PATENTSCHRIFT

(11) **EP 1 805 695 B1**
(45) Veröffentlichungstag und Bekanntmachung des Hinweises auf die Patenterteilung: **05.06.2013**
(21) Anmeldenummer: 05803846.4
(22) Anmeldetag: 18.10.2005
(51) Int. Cl.: G06K 19/077, G06K 7/08

(54) **TRANSPONDERSYSTEM**
TRANSPONDER SYSTEM
SYSTEME TRANSPONDEUR

(30) Priorität: 28.10.2004 DE 202004016751 U
(43) Veröffentlichungstag der Anmeldung: 11.07.2007
(73) Patentinhaber: pro-micron GmbH & Co. KG modular systems, 87600 Kaufbeuren (DE)
(72) Erfinder: JÄGER, Thomas, 87665 Mauerstetten (DE); WIESE, Peter, 87437 Kempfen (DE)
(74) Vertreter: Lösch, Christoph Ludwig Klaus
(86) Internationale Anmeldenummer: PCT/DE2005/001859
(87) Internationale Veröffentlichungsnummer: WO 2006/045274

(56) Entgegenhaltungen:
- EP-A- 1 445 730
- WO-A-03/067512
- US-A- 5 698 840
- US-A1- 2004 017 321
- US-B1- 6 371 380
- PATENT ABSTRACTS OF JAPAN Bd. 2003, Nr. 02, 5. Februar 2003 (2003-02-05) -& JP 2002 298095 A (NEC TOKIN CORP), 11. Oktober 2002 (2002-10-11)

## Beschreibung

Die Erfindung betrifft ein Transpondersystem zur kontaktlosen induktiven Energieübertragung von einer stehenden Seite mit mindestens einer am Stator angeordneten Lesespule auf eine rotierende Seite mit mindestens einer auf einer Spindel angeordneten Transponderspule. Solche Transpondersysteme gewinnen im täglichen Leben zunehmende Bedeutung. Sie werden in einer Passivvariante als Identifikations- und Speichermedium genutzt oder in einer Aktivvariante zur Sensordatenverarbeitung eingesetzt. Die drahtlose Datenkommunikation erlaubt den bidirektionalen Austausch von Nutz- und Kontrollinformationen. Im technischen Bereich sind miniaturisierte autonome Meßsysteme realisierbar. Mittlerweile sind eine Vielzahl von Transponderschaltkreisen und -systemen am Markt verfügbar.

Ein Beispiel eines solchen Transpondersystems ist aus der DE 199 24 830 bekannt. Diese Anordnung dient zur Messung von Temperatur und Luftdruck sowie der Überwachung des Verschleißes von Fahrzeugreifen. Die Messung der Temperatur und des Drucks erfolgt mittels eines in die Reifenwange einvulkanisierten elektronischen Transponders, der die Meßwerte auf Anforderung des Transceivers induktiv mit einem digitalen Trägerfrequenzverfahren über eine radial in die Reifenwange integrierte Flachspule als Transponderspule auf einen am Fahrzeug montierten Transceiver mit einer Sendespule überträgt. Der Transponder besteht bekanntlich aus einem oder wenigen Siliziumchips, auf denen Temperatursensor und mikromechanischer Drucksensor zusammen mit einem Mikroprozessor und zugehöriger Auswerte- und Übertragungselektronik integriert ist, sowie wenigen externen Komponenten. Die Kommunikation erfolgt zwischen Transceiver und Transponder in geträgerter digitaler Form, wobei der Transceiver ein Kommando an den Transponder ausstrahlt, der dieses zum Beispiel durch Durchführung der Messung, Kompensation - und Linearisierung der Meßwerte und Übertragung der Meßdaten und/oder weiterer im Transponder gespeicherter Daten beantwortet.

Sensoren zur Prozeßüberwachung oder Aktoren zur Prozeßoptimierung sind auch aus dem Werkzeugmaschinenbau nicht mehr wegzudenken. Die Meßwertaufnehmer werden vorwiegend dort montiert, wo Sie anschließend auch gut kontaktiert werden können. Dies führt dazu, daß zum Beispiel bei rotierenden Bauteilen, wie einer Spindel, physikalische Eigenschaften auf dem Rotor nur indirekt am Stator gemessen werden können. Drahtlose Übertragungsmethoden sind zwar hinreichend bekannt, jedoch ist die Forderung des Maschinenbaus, daß solche Systeme autark arbeiten müssen. Somit kommt die Energieeinkopplung zusätzlich zur Datenübertragung hinzu, welche vorzugsweise induktiv zu realisieren ist. Bekannte Verfahren, wie zum Beispiel die Nutzung der Transpondertechnologie kann jedoch nicht einfach adaptiert werden, weil die speziellen Forderungen des Maschinenbaus bei der Entwicklung solcher Systeme nicht ausreichend berücksichtigt sind.

Es treten beispielsweise in Folge von Wirbelstromverlusten und anderer parasitärer Effekte Signalstörungen auf, die die Datenübertragung wesentlich erschweren. Hinzu kommen komplexe Kapazitäts- und Widerstandsveränderungen sowie geometrie- und materialbedingte Induktivitätsschwankungen im Bereich der Datenübertragung.

Zur Vermeidung derartiger Störungen ist aus der DE 196 10 284 eine Antennenspule bekannt, mit wenigstens einer Spulenwindung, bei der eine Seite der Spule mit einer leitenden im wesentlichen den Bereich der Leiterschleife abdeckenden und eine offene Schleife bildenden Abschirmung versehen ist. Dadurch soll der Einfluß elektrischer Störfelder verringert werden. Durch Überbrückung der Unterbrechung in der Abschirmung durch eine frequenzselektive Schaltung können auch die Einflüsse magnetischer Störfelder unterdrückt werden.

Bei der Auslegung eines induktiv gekoppelten Systems spielen die Materialien in der direkten Umgebung eine wichtige Rolle. Beispielsweise verändert sich der komplexe Widerstand einer Spule in Abhängigkeit von der Frequenz und von den magnetischen und elektrischen Eigenschaften des Materials. Das angelegte Wechselfeld erzeugt im Material Wirbelstromverluste, die die Leistungseinkopplung auf rotierende Systeme erschweren. Ein wichtiges Merkmal in einem induktiv gekoppelten System ist die Kopplung der Spulen, wobei ein möglichst hoher Kopplungsfaktor erreicht werden sollte. Deshalb gilt, je höher die Güte des Schwingkreises ist, desto kleiner der notwendige Strom in der Sekundärspule, weil die Verluste abnehmen. Für praktische Anwendungen sind Leistungen in der Transponderspule von z. B. 10 mW bei 5 Volt typisch, was allerdings in den Lesespulen einen Strom von 170 mA bedingt.

Aufgabe der Erfindung ist es, das gattungsgemäße Transpondersystem so zu verändern, daß die Transponder-Lese-Spulenpaarungen eine überraschend hohe Güte auch bei der im Maschinenbau üblichen metallischen Umgebung liefern.

Diese Aufgabe wird durch die in den unabhängigen Ansprüchen 1, 3 bis 5 beschriebenen Transpondersysteme gelöst. Vorteilhafte Ausführungsformen sind in den abhängigen Ansprüchen beschrieben.

Die Erfindung wird nun anhand einiger bevorzugter Ausführungsbeispiele mit Hilfe einer Zeichnung erläutert, wobei gleiche Bezugsziffern funktionsmäßig dieselben Teile kennzeichnen. Die Figuren der Zeichnung zeigen im Einzelnen:
- Figuren 1 bis 4:: eine Auswahl unterschiedlicher Konfigurationen von Transponder- und Lesespulen in schematischer Darstellung,
- Figur 5: den schematischen Aufbau einer mehrlagigen Planarspule,
- Figur 6: einen Vertikalschnitt durch eine mehrlagige Planarspule im Bereich der Kontaktierung,
- Figur 7: eine alternative Ausführungsform einer mehrlagigen Planarspule,
- Figur 8: eine Aufsicht auf eine Folie zur Herstellung einer Planarspule,
- Figur 9: einen Vertikalschnitt durch eine schematisch dargestellte Transponder-Lesespulenanordnung,
- Figur 10: eine alternative Ausführungsform einer Transponder-Lesespulenpaarung im Horizontalschnitt und
- Figur 11: eine Detaildarstellung im Vertikalschnitt gemäß Schnittlinie XI-XI in Figur 10.

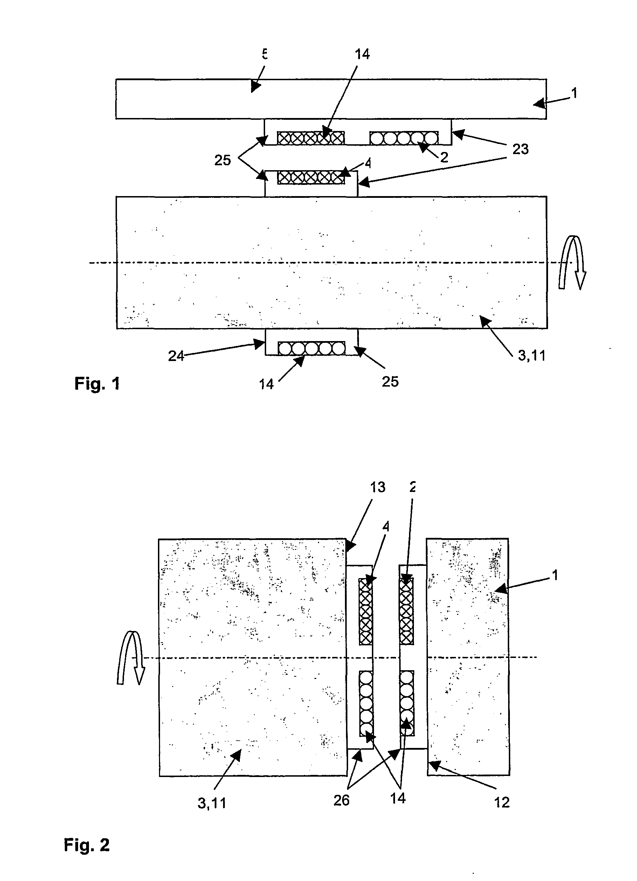

In den Figuren 1 bis 4 sind schematisch unterschiedliche Konfigurationen von Lese- und Transponderspulen dargestellt.

In Figur 1 steht eine auf einem schalen- oder E-förmigen Ferritkern 23 gewickelte Lesespule 2 einer rotationssymmetrisch gewickelten Tranponderspule 4 gegenüber. Die Transponderspule ist dabei mit ihrem Leiter 14 als eine auf einem Ringkern 24 mit u-förmigem Querschnitt gewickelten Spulenkörper dargestellt.

Die freien Schenkel 25 des U-Profils stehen dabei dem mittleren und dem äußeren Schenkel 25 des E-förmigen Ferritkerns 23 gegenüber.

In Figur 2 ist eine rotationssymmetrische axiale Variante dargestellt. Die Transponderspule 4 ist dabei auf der Stirnseite 13 des Rotors 11 befestigt, während die Lesespule 2 auf der Stirnseite 12 des Stators 1 koaxial befestigt ist. Die beiden Leiter der Lese- bzw. Transponderspule sind um die mittleren Zapfen der sich gegenüberstehenden Ferritschalenkern 26 gewunden.

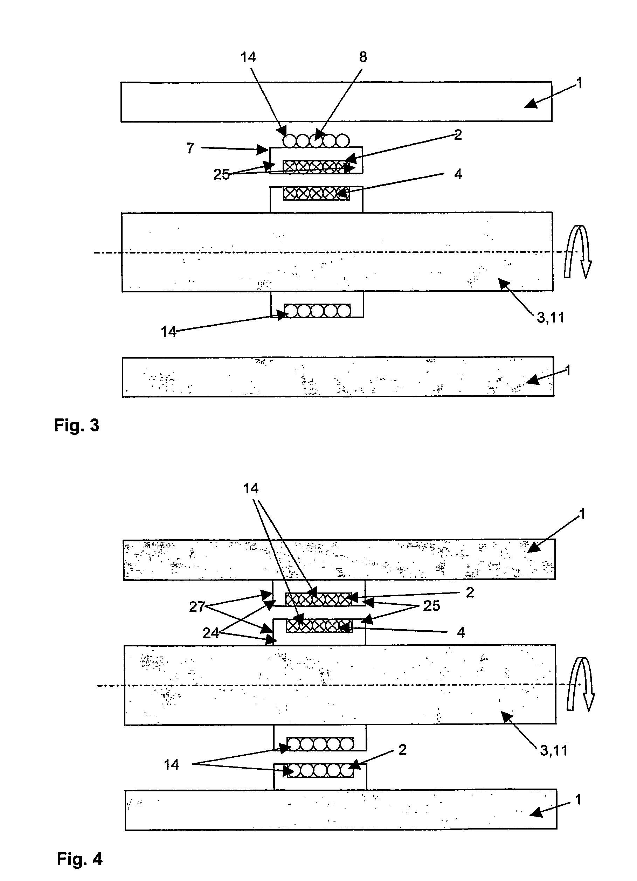

Die Anordnung in Fig. 3 entspricht prinzipiell der in Fig. 1 dargestellten Anordnung, wobei der Stator 1 jedoch den Rotor 11 umhüllt und die Lesespule 2 statt eines Schalen- oder E-Ferritkerns 23 einen U-förmigen Ferritkern besitzt, um den der Leiter der Lesespule gewickelt ist. In diesem Fall ist der Leiter um die Basis des U-förmigen Kerns gewunden. Er kann jedoch auch um die beiden freien Schenkel 25 gewickelt sein.

Figur 4 zeigt eine Paarung aus zwei rotationssymmetrischen, sich gegenüberstehenden Spulen, nämlich der Lesespule 2 und der Transponderspule 4. Beide Spulenträger 27 sind als Ringkerne 24 mit U-förmigen Querschnitten ausgebildet, wobei sich jedoch die freien Enden der Schenkel 25 gegenüberstehen.

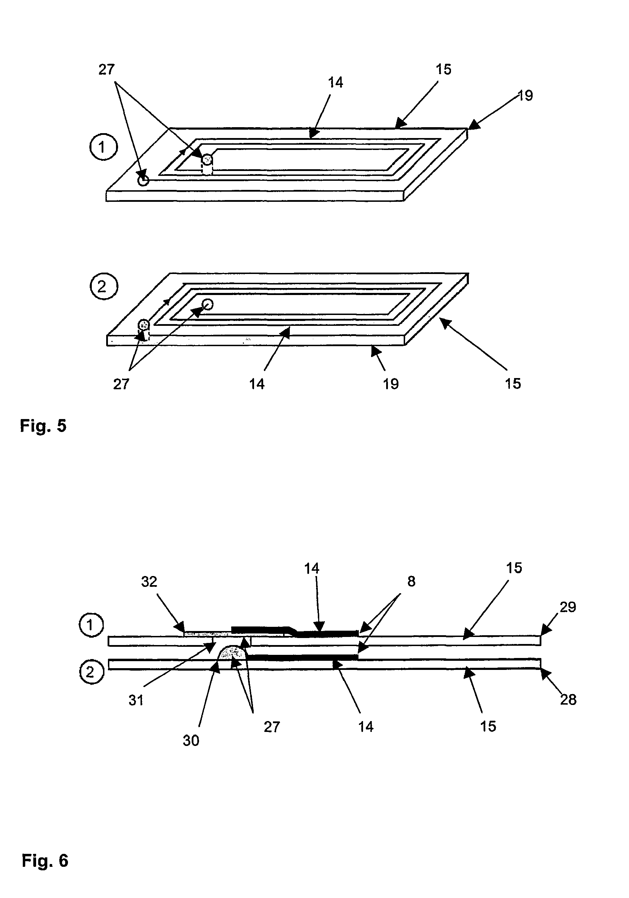

Statt der in den Figuren 1 bis 4 gezeigten Ringkerne lassen sich die dort gezeigten Transponderspulen fertigungstechnisch günstiger in Form von Planarspulen verwirklichen, wie in Figur 5 gezeigt. Jeweils ein Teil des Leiters 14 ist auf eine Folie 15 aufgebracht und ergibt somit einen Teil der Planarpule 19. Die Kontakte 27 sind auf den gegenüberliegenden Fläche der Folie 15 aufgebracht. Die nächste Lage ist mit deckungsgleichen Kontakten ausgerüstet, die sich jedoch auf den jeweils gegenüberliegenden Seite der anderen Lage befinden, so daß bei einem in Deckungbringen ein Kontakt der einen Lage mit dem anderen entsprechenden Kontakt der anderen Lage kontaktiert und die anderen beiden Kontakte für die Außenkontaktierung zur Verfügung stehen. In der einen Lage fließt dann der Strom von außen nach innen und in der anderen Lage entgegengesetzt, wenn der Leiter 14 der Planarspule jeder Ebene spiralförmig ausgebildet ist. Diese Planarspule kann sowohl als Lese-, als auch als Transponderspule Verwendung finden. Wenn sie um die Spindel gelegt ist, bildet sie jedoch keine rotationssymmetrische Spule. Die Übertragung von Energie erfolgt gleichförmiger, je größer der Umfang ist, den die Planarspule im Stator oder auf dem Rotor überstreicht.

In Figur 6 ist als Vertikalschnitt schematisch eine Möglichkeit zur Kontaktierung zweier Lagen von Planarspulen dargestellt. Auf der unteren Lage 28 der Planarspule ist der Kontakt 27 als Kontakthügel 30 ausgebildet, der bei einem Aufeinanderpressen der beiden Lagen 28 und 29 eine gegenüberliegende Öffnung 31 durchsetzt und die Kontaktfläche 32 berührt. Durch geeignete Verfahren können dann Hügel 30 mit Fläche 32 verbunden werden.

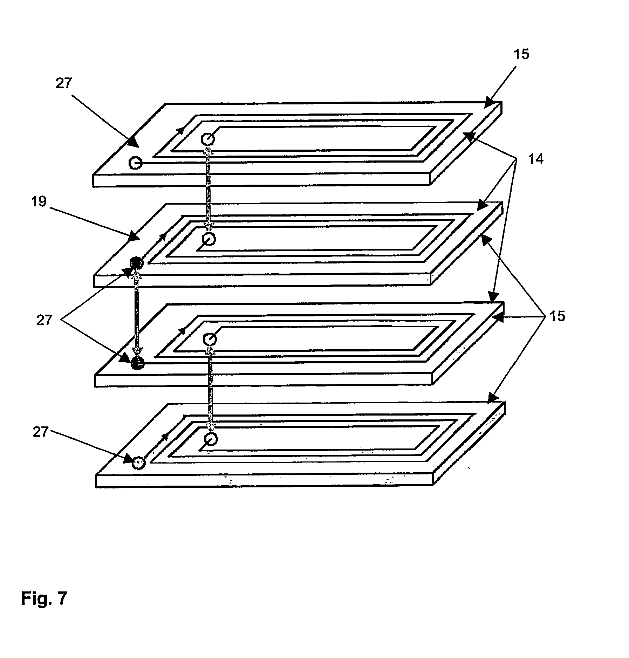

Auf diese Weise lassen sich fast beliebig viele Planarspulen übereinander anordnen, wie beispielsweise in Figur 7 gezeigt.

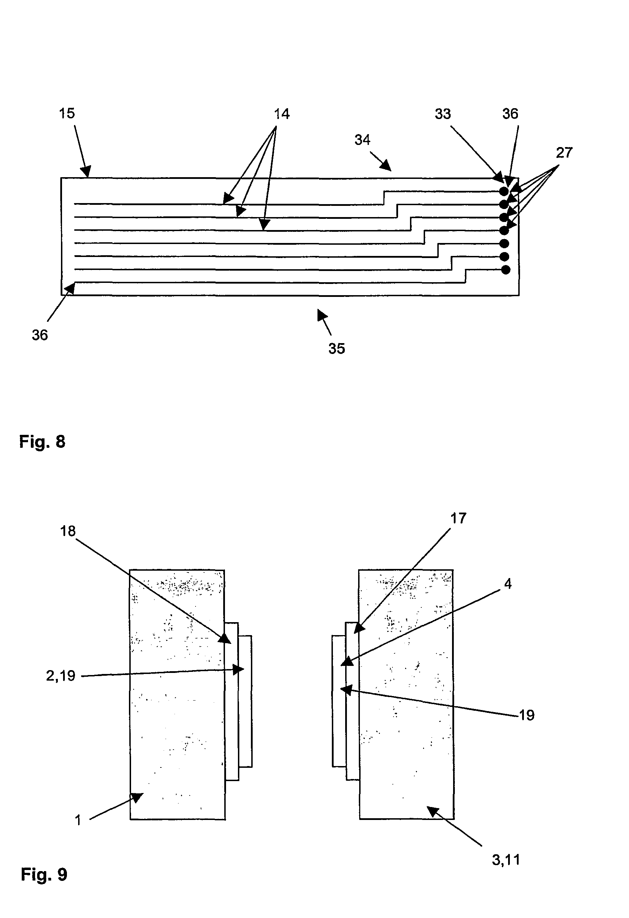

Besonders kostengünstig läßt sich eine Planarspule verwirklichen, bei der auf einer Folie 15, beispielsweise wie in Figur 8 gezeigt, mehrere Leiter 14 nebeneinander angeordnet sind. Die einzelnen Kontakte 27 am Ende 33 sind durch geeignete Leiterführung im Bereich 34 so gegenüber den Leitern 14 im Bereich 35 um einen Leiterabstand versetzt, daß bei einem Umschlingen, beispielsweise des Rotors, die Leiter sich zu einer Wicklung nach einem geeigneten Kontaktieren zusammenfügen. Die Spule weist an ihrem diagonal gegenüberliegenden Enden jeweils ein außen kontaktierendes Wicklungsende 36 auf. Durch entsprechendes Ablängen kann eine derartige Folie auch für unterschiedliche Durchmesser Verwendung finden.

In Figur 9 ist eine Anordnung von Lese- und Transponderspule mittels Planarspulen 19 dargestellt, wie sie der in Figur 4 gezeigten Konfiguration entspricht. Der Stator 1 ist dabei vorzugsweise aus einem elektrisch gut leitenden Material gefertigt, beispielsweise Aluminium. Zwischen der Lesespule 2 und dem Stator 1 ist eine Schicht 18 vorgesehen, die vorzugsweise aus einem ferritischen Material, insbesondere eine Ferritfolie von 0,2 mm Stärke besteht, wie es unter der Bezeichnung F96 von der Firma Epcos vertrieben wird. Zwischen Folie und Rotor kann noch eine dünne Kupferschicht, z. B. von 0,05 mm Dicke vorgesehen werden. Die Lesespule 2 ist vorzugsweise als rotationssymmetrische Spule gefertigt, die an geeigneter Stelle in bekannter Weise mit dem Schreib-Lese-Gerät verbunden wird. Ihr gegenüber liegt die ebenfalls als rotationssymmetrische Planarspule 19 ausgebildete Transponderspule 4. Zwischen dieser und dem meist aus einem Werkzeugstahl bestehenden Rotor 11, meist einer Werkzeugmaschinenspindel 3 also, ist eine Schicht 17 mit 0,025 mm Dicke aus einem hochpermeablen Material, nämlich aus einer amorphen weichmagnetischen Metall bestehend vorgesehen, beispielsweise dem von der Vakuumschmelze Hanau vertriebenen unter der Bezeichnung Vitrovac vertriebenen Material.

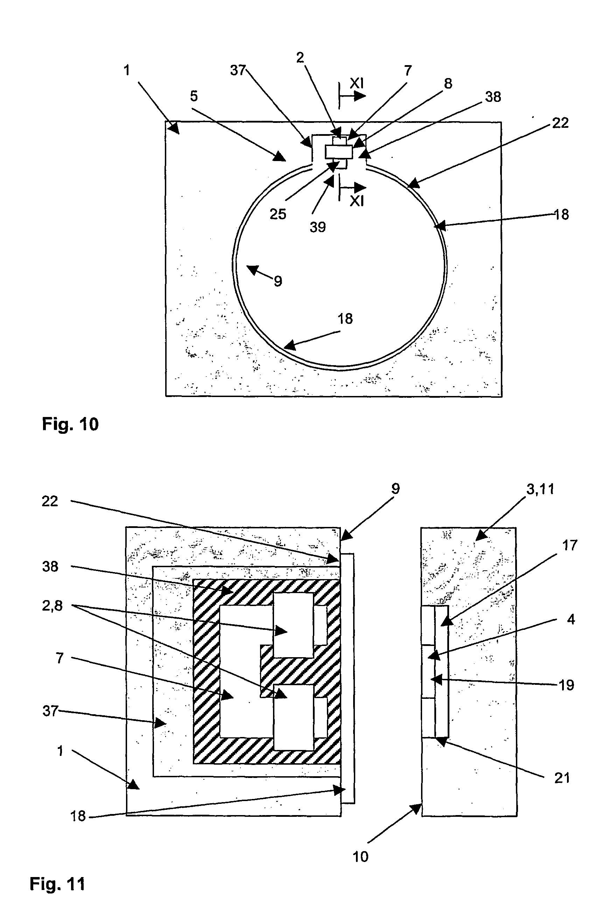

Figur 10 zeigt eine Aufsicht auf einen Horizontalschnitt mit einer alternativen Ausführungsform der Lesespule 2, bei der die Spule 8 auf einem U-förmigen Ferritkern 7 gewickelt ist und zwar auf den freien Schenkeln 25 des Kerns 7. Die Lesespule 2 befindet sich dabei in einem Gehäuse 37 aus Aluminium und ist in diesem durch Vergußmasse 38 fixiert. Die Umgebung 5 der Lesespule 2 kann auch von einem anderen üblicher Werkstoff, wie Baustahl gebildet sein. Vorzugsweise ist sie jedoch ebenfalls aus Aluminium. Der innere Umfang 9 des Stators 1 ist von der erwähnten Schicht 18 im Bereich der Lesespule 2 bandförmig ausgekleidet. Das Band ist jedoch im Bereich 39 der Lesespule 2 unterbrochen.

Figur 11 zeigt einen Vertikalschnitt als Detail gemäß Schnittlinie XI-XI in Figur 10. Die unterbrochene ferritische Schicht 18 hat zusätzlich an ihrer, dem Stator 1 zugewandten Seite eine gut leitende Schicht 22, beispielsweise aus Kupfer. In einer ringförmigen Nut 21 ist die rotationssymmetrische in axialer Richtung wesentlich schmalere Transponderspule 4 angeordnet. Zwischen der als Planarspule 19 ausgebildeten Transponderspule 4 und dem Rotor 11 ist die bereits erwähnte hochpermeable weichmagnetische Schicht 17 vorgesehen. Die Schicht 17 ist breiter als die axiale Abmessung der Transponderspule 4.

Auf diese Weise lassen sich ausreichende Leistungen für einen Mikrochip und Sensoren mit bekannter Auswerte- und Übertragungselektronik, wie sie bei heutigen Transpondersystemen üblich sind, besonders kostengünstig verwirklichen. Typische Abmessungen sind dabei für die Transponderspule eine axiale Erstreckung von beispielsweise 6 mm, die zwischen Rotor und Stator vorgesehen Schichten haben eine axiale Erstreckung von beispielsweise 7 mm. Es reicht aus, wenn die ferritische Schicht beispielsweise 0,2 mm und die hochpermeable Schicht 0,025 mm Dicke aufweist. Die Dicke solcher Planarspulen liegt bei ca. 0,1 mm. Solche Spulen werden bei einer Frequenz von etwa 125 kH betrieben.

Bei anderen Frequenzen, die von solchen Transpondersystemen genutzt werden, sind entsprechende Anpassungen vorzunehmen. Auf diese Weise lassen sich Spulenpaarungen darstellen, die eine überraschend hohe Güte auch bei der im Maschinenbau üblichen metallischen Umgebung liefern. Die Transponderspule ist an die Last anzupassen. Aufgrund der erfindungsgemäßen Maßnahmen reicht eine klein dimensionierte Sendespule aus, um das Mikrosystem auf dem Rotor zu versorgen. Typisch sind Abmessungen der Sendespule von 25 x 25 x 25 mm. Natürlich lassen sich auch mehrere Spulen jeweils in einem System vereinigen.

Die Spulen werden vorzugsweise in Reihenresonanz betrieben, wobei eine besonders gute Energieübertragung zwischen dem stehenden und bewegten Teil möglich ist. Die beschriebenen Maßnahmen bewirken gegenüber Luftspulen eine Verbesserung von mehr als einem Faktor 10.

### BEZUGSZEICHENLISTE

| | |
|---|---|
| 1 | Stator |
| 2 | Lesespule |
| 3 | Spindel |
| 4 | Transponderspule |
| 5 | Umgebung |
| 6 | Flachspule |
| 7 | Kern, u-förmig |
| 8 | Spule |
| 9 | Umfang, Stator |
| 10 | Umfang, Rotor |
| 11 | Rotor |
| 12 | Stirnseite, Stator |
| 13 | Stirnseite, Rotor |
| 14 | Leiter |
| 15 | Folie |
| 16 | |
| 17 | amorphe, weichmetallische Metallschicht |
| 18 | ferritische, elektrisch nicht leitende Metallschicht |
| 19 | Planarspule, rotationssymmetrisch |
| 20 | Folienband |
| 21 | Ringnut |
| 22 | Kupferschicht |
| 23 | Ferritkern |
| 24 | Ringkern |
| 25 | Schenkel |
| 26 | Ferritschalenkern |
| 27 | Kontakte |
| 28 | Untere Lage |
| 29 | Obere Lage |
| 30 | Kontakthügel |
| 31 | Öffnung |
| 32 | Kontaktflächen |
| 33 | Ende |
| 34 | Bereich |
| 35 | Bereich |
| 36 | Wicklungsende |
| 37 | Gehäuse |
| 38 | Vergußmasse |
| 39 | Bereich |

## Patentansprüche

1. Transpondersystem zur kontaktlosen induktiven Energieübertragung von einer stehenden Seite mit mindestens einer am Stator (1) angeordneten Lesespule (2) auf eine rotierende Seite mit mindestens einer auf einer Spindel (3) angeordneten Transponderspule (4), **dadurch gekennzeichnet, dass**
die Lesespule auf einem schalen- oder E-förmigen Ferritkern (23) gewickelt ist, und das die Transponderspule rotationssymmetrisch auf einem Ringkern (24) gewickelt ist und die Lesespule gegenüber steht.

2. Transpondersystem nach Anspruch 1, wobei die Lesespule (2) breiter als die Transponderspule (4) ausgebildet ist.

3. Transpondersystem zur kontaktlosen induktiven Energieübertragung von einer stehenden Seite mit mindestens einer am Stator (1) angeordneten Lesespule (2) auf eine rotierende Seite mit mindestens einer auf einer Spindel (3) angeordneten Transponderspule (4), **dadurch gekennzeichnet, dass**
die Transponderspule auf eine Stirnseite (13) des Rotors befestigt ist, während die Lesespule auf der Stirnseite (12) des Stators koaxial befestigt ist, und dass die beiden Leiter der Lese- bzw. Transponderspule um die mittleren Zapfen der sich gegenüberstehenden Ferritschalenkerne (26) gewunden sind.

4. Transpondersystem zur kontaktlosen induktiven Energieübertragung von einer stehenden Seite mit mindestens einer am Stator (1) angeordneten Lesespule (2) auf eine rotierende Seite mit mindestens einer auf einer Spindel (3) angeordneten Transponderspule (4), **dadurch gekennzeichnet, dass**
der Stator den Rotor umhüllt und der Leiter der Lesespule um einen U-förmigen Ferritkern gewickelt ist und der Leiter der Transponderspule rotationssymmetrisch auf einem Ringkern gewickelt ist und der Lesespule gegenübersteht.

5. Transpondersystem zur kontaktlosen induktiven Energieübertragung von einer stehenden Seite mit mindestens einer am Stator (1) angeordneten Lesespule (2) auf eine rotierende Seite mit mindestens einer auf einer Spindel (3) angeordneten Transponderspule (4), **dadurch gekennzeichnet, dass**
der Stator den Rotor umhüllt und der Leiter der Lesespule auf einem U-förmigen Ferritkern gewickelt ist, und dass die Transponderspule rotationssymmetrisch ist und der Lesespule gegenübersteht und dass der innere Umfang (9) des Stators mit einer Schicht (18) aus einem ferritischen Material bandförmig ausgekleidet ist.

6. Transpondersystem nach Anspruch 5, wobei die Transponderspule (4) und die Lesespule (2) als Flachspule (6) ausgebildet sind.

7. Transpondersystem nach Anspruch 6, wobei die Flachspule (6) als rotationssymmetrische Planarspule (19) ausgebildet ist, vorzugsweise mehrlagig.

8. Transpondersystem nach Anspruch 6 oder 7, wobei die Flachspule (6), vorzugsweise als mit Leitern (14) bedruckte Folie (15), selbstklebend ausgerüstet ist.

9. Transpondersystem nach einem der Ansprüche 6 bis 8, wobei die Flachspule (6) aus einem Folienband (20) mit im wesentlichen parallelen Leitern (14) gebildet ist, das willkürlich ablängbar ist, wobei die Leiterenden nach einem zu einem Zylinder gebogenem Band sich um einen Leiterabstand versetzt zu einer Spule zusammenfügend kontaktiert sind.

10. Transpondersystem nach einem der Ansprüche 5 bis 9, wobei die Schicht (18) aus ferritischen Material im Bereich der Lesespule (2) unterbrochen ausgebildet ist.

## Claims

1. Transponder system for the contactless inductive power transmission from a stationary side with at least one read coil (2) arranged on the stator (1) to a rotating side with at least one transponder coil (4) arranged on a spindle (3), **characterized in that** the read coil is wound on a shell-shaped or E-shaped ferrite core (23), and the transponder coil is wound on an annular core (24) in a rotationally symmetrical fashion and is situated opposite the read coil.

2. Transponder system, according to Claim 1, wherein the read coil (2) is of wider design than the transponder coil (4).

3. Transponder system for the contactless inductive power transmission from a stationary side with at least one read coil (2) arranged on the stator (1) to a rotating side with at least one transponder coil (4) arranged on a spindle (3), **characterized in that** the transponder coil is fastened on an end face (13) of the rotor, while the read coil is fastened coaxially on the end face (12) of the stator, and **in that** the two conductors of the read and transponder coil, respectively, are wound around the middle pin of the ferrite shell core (26) situated opposite.

4. Transponder system for the contactless inductive power transmission from a stationary side with at least one read coil (2) arranged on the stator (1) to a rotating side with at least one transponder coil (4) arranged on a spindle (3), **characterized in that** the stator encloses the rotor, and the conductor of the read coil is wound around a U-shaped ferrite core, and the conductor of the transponder coil is wound on an annular core and is situated opposite the read coil.

5. Transponder system for the contactless inductive power transmission from a stationary side with at least one read coil (2) arranged on the stator (1) to a rotating side with at least one transponder coil (4) arranged on a spindle (3), **characterized in that** the stator encloses the rotor, and the conductor of the read coil is wound on a U-shaped ferrite core, and **in that** the transponder coil is rotationally symmetrical and situated opposite the read coil, and **in that** the inner periphery (9) of the stator is lined by a layer (18) of a ferritic material in the form of a tape.

6. Transponder system according to Claim 5, wherein the transponder coil (4) and the read coil (2) are designed as a flat coil (6).

7. Transponder system according to Claim 6, wherein the flat coil (6) is designed, preferably with multiple plies, as a rotationally symmetrical planar coil (19).

8. Transponder system according to Claim 6 or 7, wherein the flat coil (6) is equipped self-adhesively, preferably as a foil (15) printed with conductors (14).

9. Transponder system according to one of Claims 6 to 8, wherein the flat coil (6) is formed from a foil tape (20) with substantially parallel conductors (14) and which can be cut to length as desired, the conductor ends being joined and brought into contact in a fashion offset by a conductor spacing to form a coil in the manner of a tape bent to form a cylinder.

10. Transponder system according to one of Claims 5 to 9, wherein the layer (18) of ferritic material is designed in an intermittent fashion in the region of the read coil (2).

## Revendications

1. Système transpondeur pour la transmission d'énergie inductive sans contact depuis un côté fixe avec au moins une bobine de lecture (2) disposée sur un stator (1) vers un côté rotatif avec au moins une bobine transpondeur (4) disposée sur une broche (3), **caractérisé en ce que**
la bobine de lecture est enroulée sur un noyau de ferrite (23) en forme de coque ou en forme de E, et **en ce que** la bobine transpondeur est enroulée en symétrie de rotation sur un noyau toroïdal (24) et la bobine de lecture se trouvant en face.

2. Système transpondeur selon la revendication 1, la bobine de lecture (2) étant réalisée de manière plus large que la bobine transpondeur (4).

3. Système transpondeur pour la transmission d'énergie inductive sans contact depuis un côté fixe avec au moins une bobine de lecture (2) disposée sur un stator (1) vers un côté rotatif avec au moins une bobine transpondeur (4) disposée sur une broche (3), **caractérisé en ce que**
la bobine transpondeur est fixée sur un côté frontal (13) du rotor, alors que la bobine de lecture est fixée coaxialement sur le côté frontal (12) du stator, et **en ce que** les deux conducteurs de la bobine de lecture et/ou bobine transpondeur sont enroulés autour des axes du milieu des noyaux en coque ferritiques (26) se faisant face.

4. Système transpondeur pour la transmission d'énergie inductive sans contact depuis un côté fixe avec au moins une bobine de lecture (2) disposée sur un stator (1) vers un côté rotatif avec au moins une bobine transpondeur (4) disposée sur une broche (3), **caractérisé en ce que**
le stator enveloppe le rotor et **en ce que** le conducteur de la bobine de lecture est enroulé autour d'un noyau de ferrite en forme de U et **en ce que** le conducteur de la bobine transpondeur est enroulé en symétrie de rotation sur un noyau toroïdal et se situe en face de la bobine de lecture.

5. Système transpondeur pour la transmission d'énergie inductive sans contact depuis un côté fixe avec au moins une bobine de lecture (2) disposée sur un stator (1) vers un côté rotatif avec au moins une bobine transpondeur (4) disposée sur une broche (3), **caractérisé en ce que**
le stator enveloppe le rotor et le conducteur de la bobine de lecture étant enroulé sur un noyau de ferrite en forme de U, et **en ce que** la bobine transpondeur est à symétrie de rotation et se trouve en face de la bobine de lecture et **en ce que** la périphérie intérieure (9) du stator est revêtue en forme de bande avec une couche (18) en un matériau ferritique.

6. Système transpondeur selon la revendication 5, la bobine transpondeur (4) et la bobine de lecture (2) étant réalisées en tant que bobine plate (6).

7. Système transpondeur selon la revendication 6, la bobine plate (6) étant réalisée en tant que bobine plane à symétrie de rotation (19), de préférence à plusieurs couches.

8. Système transpondeur selon la revendication 6 ou 7, la bobine plate (6) étant garnie de préférence en tant que film (15) avec des conducteurs (14) imprimés, de manière autocollante.

9. Système transpondeur selon l'une des revendications 6 à 8, la bobine plate (6) étant formée par un film en bande (20) avec des conducteurs (14) sensiblement parallèles qui peut être tronçonné arbitrairement, les extrémités des conducteurs, après une bande recourbée en un cylindre, étant mises en contact par assemblage en une bobine avec un décalage de l'ordre d'un écartement de conducteur.

10. Système transpondeur selon l'une des revendications 5 à 9, la couche (18) en matériau ferritique étant réalisée de manière interrompue dans la zone de la bobine de lecture (2).
